# EUROPEAN PATENT SPECIFICATION

(11) **EP 2 531 840 B1**
(45) Date of publication and mention of the grant of the patent: **12.10.2016**
(21) Application number: 11703542.8
(22) Date of filing: 31.01.2011
(51) Int. Cl.: G01N 21/91, G01N 21/93

(54) **NON-DESTRUCTIVE LIQUID PENETRANT INSPECTION PROCESS INTEGRITY VERIFICATION TEST PANEL**
TESTTAFEL ZUR NICHT DESTRUKTIVEN ÜBERPRÜFUNG EINES PROZESSES AUF BESTÄNDIGKEIT GEGEN FLÜSSIGKEITSEINDRINGUNG
PLAQUE D'ESSAI PERMETTANT LA VÉRIFICATION NON DESTRUCTRICE DE L'INTÉGRITÉ D'UN PROCESSUS DE CONTRÔLE DE LA PÉNÉTRATION D'UN LIQUIDE

(30) Priority: 03.02.2010 US 301094 P
(43) Date of publication of application: 12.12.2012
(73) Proprietor: Illinois Tool Works Inc., Glenview, IL 60025 (US)
(72) Inventor: DUNNWALD, Paul, Glenview, Illinois 60026 (US)
(74) Representative: Trinks, Ole
(86) International application number: PCT/US2011/023097
(87) International publication number: WO 2011/097146

(56) References cited:
- FR-A- 1 287 266
- US-A- 3 401 556
- US-A- 3 946 597
- US-B1- 6 311 538
- ANONYMOUS: 'Blind hole - Wikipedia, the free encyclopedia', [Online] 19 May 2016, XP055273606 Retrieved from the Internet: <URL:https://en.wikipedia.org/wiki/Blind_ho le> [retrieved on 2016-05-19]
- O ÇAKIR ET AL: 'Archives of Materials Science and Engineering, Chemical machining', [Online] 01 August 2007, XP055273615 Retrieved from the Internet: <URL:http://w.archivesmse.org/vol28_8/28810 .pdf> [retrieved on 2016-05-19]

## Description

### BACKGROUND OF THE INVENTION

The subject matter disclosed herein relates generally to liquid penetrant inspection processes for inspecting metallic parts for defects such as surface cracks, and in particular, to a test panel for verifying the operational integrity and ability of the inspection process to identify indications of at least a predetermined minimum objectionable size should they exist in an actual part. The indications, may be open voids, cracks, gauges, pin holes, scratches, flaws and the like.

Liquid penetrant inspection processes are well known in the art for inspecting metallic parts. If the liquid penetrant inspection process is not operating properly, the process may fail to identify objectionable indications. Test panels are used to verify that the inspection process is working properly. The inspection process may inspect a small sample of parts, dozens of parts, hundreds of parts or even more. Test panels are commonly used during a batch of inspected parts to verify the inspection process worked for that batch. If a test panel comes back negative, then this could be an indication that the inspection process is malfunctioning which may cause the manufacturer to scrap the parts associated with the tested batch. For example, it is known to test vehicle engine parts for defects. It is also known to test engine cylinder blocks for cracks. If no defects are identified in the inspection process and the test panel comes back positive, the parts can move forward for installation. However, if the test panel comes back negative, this is an indication that there might be something wrong with the inspection process which can lead to further testing of the same parts or ultimately scrapping of the parts so as to prevent the potential use of defective parts. The operator must then investigate the process parameters to determine what actions must be done to the process so that the process identifies the required sensitivity level indicator on the test panel

Two conventional test panels are commonly referred to in the industry as TAM or PMS5. The TAM or PMS5 panels and are each constructed of a rectangular base plate of stainless steel. The front side of the base plate is chrome plated. Five indicators or levels of detection sensitivity are formed in the chrome plated surface. The indicators are typically formed in five different sizes representing five different levels of sensitivity. The conventional indicators are formed in "starburst" shapes. The starburst shaped indicators range in size from the largest size, level 1, requiring the least degree of sensitivity by the process to be detected e.g. large cracks, to starburst indicators that are progressively smaller in size, the smallest size being level 5, requiring the highest degree of process sensitivity to be detected.

The starburst cracks are formed in the layer of chrome plating by striking, peening, or deforming the back side of the base plate at different impact force levels. The impacts cause the chrome plating, on the front side, to bulge and crack into the different starbursts of the desired size. The size of each starburst indicator must be of a specified size and within a specified tolerance which is in general determined by the length of the longest straight line across the largest dimension of the starburst indicator. The size of the starburst indicators must be exactly maintained so that the sensitivity required to detect a given indicator is in theory known and preferably constant and correlates to the size of an indication in an actual part under test, confirming, in theory, that if the process is sensitive enough to detect the desired sensitivity level indicator on the test panel, the process will also then detect cracks of the corresponding magnitude in an actual part under test.

While the conventional indicators are designed to test to any of the five levels of sensitivity, typically parts are tested using the level 4 sensitivity indicator. According to industry standards, to verify that the process is operating properly, the process must be able to detect that the indicator on the test panel corresponding to the sensitivity at least one level more sensitive than the level to which the test is designed and intended to detect. More specifically, if the test of the actual part is directed to detect to sensitivity level 3, the test must in addition to detecting the level 3 indicator on the test panel also detect the level 4 indicator. Similarly, if the process is designed to detect a crack at sensitivity level 4, the smallest defect normally tested for, it must also be able to detect the level 5 indicator on the panel.

However, the conventional TAM or PMS5 test panels have certain shortcomings. For example, it is often difficult to consistently form the desired indicator sizes in the TAM or PMS5 panels because the starbursts pattern are formed by striking or peening the base plate. When manufacturing the conventional TAM or PMS5 test panels, forming the desired size starburst indicator is more of an art than a science in that for various reasons the chrome plating on the base does not crack in a consistent manner because the chrome plating cracks similar to how a panel of glass cracks in a random uncontrolled manner. Therefore, no two starburst. indicators are exactly the same. Moreover, starburst indicators are not uniform in size and shape between panels.

One principle reason for the non-uniformity of the starburst indicators is that the thickness of plating can vary. The temperature of the test panel, when struck, can also affect how the test panel cracks. Therefore, the force level to be applied when striking the substrate to form the desired starburst indication size is determined subjectively by the operator. Accordingly, in use, the sensitivity levels actually determined during an integrity verification test using the conventional test panels may be inaccurate, inconsistent, and non repeatable thus yielding unreliable results. Further, a large quantity of test panels may be rejected during manufacture resulting in increased waste and increased costs in fabricating new acceptable test panels. A further shortcoming of the conventional test panels is that over time the repeated introduction and washing of penetrant into and out of the random cracks of the starbursts indicators causes the chrome plating to erode. The erosion causes the starburst indicator to change in shape and/or volume thus resulting in a change in the starburst indicator's level of sensitivity to detection.

The document FR 1 287 266 relates to a test panel for verifying the sensitivity of an penetrant agent used in an inspection process to identify cracks in an object. The conventional test panel comprises a substrate made of metal, plastics, glass, ceramic or any other substance and being attached to a base. It is further provided with a group of lines having identical dimensions or lines varying in lenght and depths or varying in length and width.

### BRIEF DESCRIPTION OF THE INVENTION

The present invention relates particularly to a fluid penetrant inspection test panel for verifying the operational integrity and ability of an inspection process to identify cracks of at least a predetermined minimum objectionable size should they exist in an actual part.

The invention relates to a fluid penetrant inspection test panel as defined in independent claim 1, wherein further developments of the inventive test panel are defined in the sub-claims.

The fluid penetrant inspection test panel includes a substrate having a first surface and an opposing second surface, the first surface configured to receive a dye penetrant thereon, and a plurality of sensitivity indicators formed in the first surface, the plurality of sensitivity indicators having a cross-sectional profile defined by a continuous edge.

According to an embodiment of the present invention, the fluid penetrant inspection test panel includes a substrate having a substantially triangular shape, the substrate having a first surface and an opposing second surface, the first surface configured to receive a dye penetrant thereon, and a plurality of sensitivity indicators formed in the first surface, the plurality of sensitivity indicators having a cross-sectional profile defined by a continuous edge.

In accordance with the present invention the fluid penetrant inspection test panel includes an uncoated substrate having a first surface and an opposing second surface, the first surface configured to receive a dye penetrant thereon, and a plurality of sensitivity indicators formed in the first surface, the plurality of sensitivity indicators being formed as blind holes.

Other features and advantages of the invention will become apparent to those skilled in the art upon review of the following detailed description, claims and drawings in which like numerals are used to designate like features.

### BRIEF DESCRIPTION OF THE DRAWINGS

Figure 1 is a top perspective view of an exemplary test panel formed in accordance with various embodiments.
Figure 2 is a cross-sectional view of the test panel shown in Figure 1.
Figure 3 is another cross- sectional view of the test panel shown in Figure 1.
Figure 4 is an illustration of an exemplary test panel after the test panel has been utilized to verify a non-destructive liquid penetrant inspection process.
Figure 5 is a top perspective view of another exemplary test panel formed in accordance with various embodiments.
Figure 6 is a cross-sectional view of the test panel shown in Figure 5.
Figure 7 is an illustration of the exemplary test panels shown in Figure 5 after the test panels have been utilized to verify a non-destructive liquid penetrant inspection process.

### DETAILED DESCRIPTION OF THE INVENTION

Described herein is a dye penetrant inspection test panel which is used to verify that the particular process parameters, as set up to test a particular part, will identify indications of the size sought to be detected in the part to be tested should such actual indications be present.

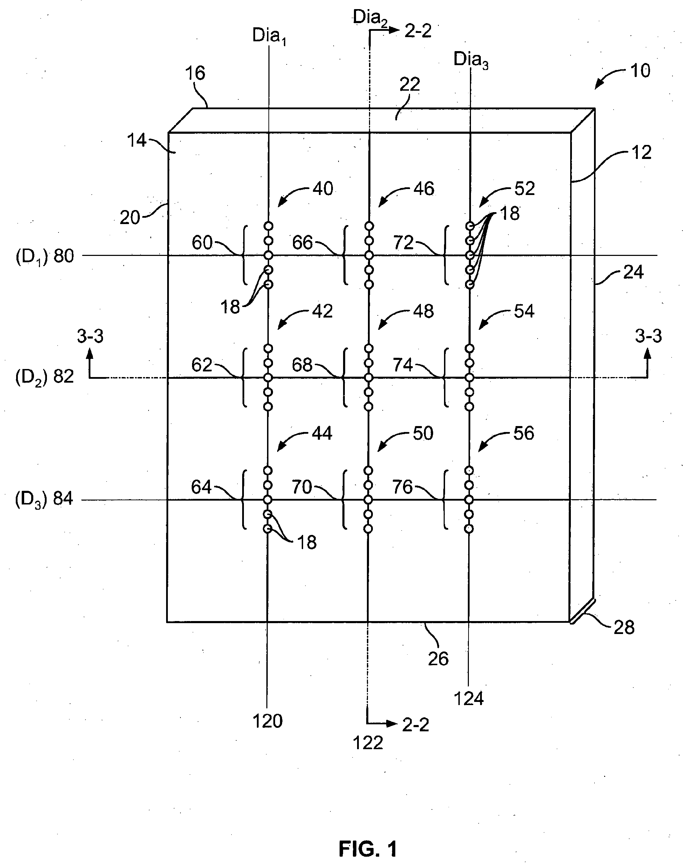

Figure 1 is a perspective view of an exemplary test panel 10. The test panel 10 is formed to include a substrate 12 having a first surface 14 and an opposing second surface 16. The test panel 10 has a plurality of sensitivity indicators 18 formed therein. In the exemplary embodiment, the substrate 12 is an uncoated substrate. Uncoated, as used herein, means that there is no plating material attached, or applied, to either the first or second surfaces 14 and 16 of the substrate 12.

The test panel 10 may be formed in a variety of shapes or sizes depending on the particular application. In the illustrated embodiment shown in Figure 1, the test panel 10 is elongated and rectangular in shape. Thus, the substrate 12 includes a first side 20, a second side 22, a third side 24 that is substantially parallel to the first side 20, and a fourth side 26 that is substantially parallel to the second side 22. A thickness 28 of the substrate 12 may be determined based on a depth of the sensitivity indicators 18 as is discussed in more detail below. In the exemplary embodiment, the test panel 10 is fabricated from a metallic material, such as a stainless steel material, an aluminum material, a copper material, and the like. It should be realized that the test panel 10 may be fabricated from any material that is suitable for performing dye penetrant inspection process verification. For example, the test panel 10 may be molded from a plastic material using an injection molding procedure.

As discussed above, the test panel 10 includes a plurality of sensitivity indicators 18. The sensitivity indicators 18 are formed on the first surface 16 of the substrate 12. In the exemplary embodiment, the sensitivity indicators 18 are each formed as circular openings that have a cross-sectional profile that is defined by a continuous edge, such as blind holes, for example. A blind hole, as used herein, is defined as a hole, or well, that is reamed, drilled, or milled to a specified depth without breaking through to the other side of the substrate 12. Therefore, each sensitivity indicator 18 has a depth that is less than the thickness 28 of the substrate 12. The depths of the sensitivity indicators 18 is discussed in more detail below.

Optionally, at least some of the sensitivity indicators 18 may have a cross-sectional profile that is defined by a continuous edge to form a non-circular opening. For example, at least some of the sensitivity indicators 18 may have a triangular cross-sectional profile, a square cross-sectional profile, a rectangular cross-sectional profile, or any multi-sided cross- sectional profile. Moreover, although the exemplary embodiment describes sensitivity indicators 18 having a flat bottom, it should be realized that the sensitivity indicators 18 may have a curved bottom or may taper from the opening of the sensitivity indicator 18 to a point at the bottom of the sensitivity indicator 18. For example, at least one sensitivity indicator 18 may be formed to have a circular opening that tapers to the bottom of the sensitivity indicator 18 to form a cone. Another sensitivity indicator 18 may be formed to have a square opening, that tapers to the bottom of the sensitivity indicator 18 to form a pyramid. A further sensitivity indicator 18 may be formed to have a triangular opening that tapers to the bottom of the sensitivity indicator 18, etc.

In the exemplary embodiment, the sensitivity indicators 18 are formed using an electrical discharge machining (EDM) process such that the sensitivity indicators 18 are accurately dimensioned for each test panel 10. The EDM process also facilitates ensuring that the sensitivity indicators 18, having the same sensitivity indicator level, also have the same dimensions from test panel to test panel. Specifically, once the dimensions of a specific sensitivity indicator 18 has been determined, a different sensitivity indicator, having substantially the same dimensions, can be formed in numerous different test panels.

In one embodiment, the sensitivity indicators 18 are arranged in a plurality of groups that are space apart from each other on the first surface 14 of the substrate 12. Each group includes a plurality sensitivity indicators 18 having the same diameter and the same depth. In the exemplary embodiment, the test panel 10 includes a first group 40 that includes a plurality of sensitivity indicators 60 having the same diameter and depth; a second group 42 that includes a plurality of sensitivity indicators 62 having the same diameter and depth; a third group 44 that includes a plurality of sensitivity indicators 64 having the same diameter and depth; a fourth group 46 that includes a plurality of sensitivity indicators 66 having the same diameter and depth; a fifth group 48 that includes a plurality of sensitivity indicators 68 having the same diameter and depth; a sixth group 50 that includes a plurality of sensitivity indicators 70 having the same diameter and depth; a seventh group 52 that includes a plurality of sensitivity indicators 72 having the same diameter and depth; an eighth group 54 that includes a plurality of sensitivity indicators 74 having the same diameter and depth; and a ninth group 56 that includes a plurality of sensitivity indicators 76 having the same diameter and depth. It should be realized that although the exemplary embodiment describes and illustrates nine different groups of sensitivity indicators, that the test panel 10 may have fewer than, or more than, nine groups of sensitivity indicators 18.

The groups 40...56 are arranged in rows and columns based on the diameter and depth of the sensitivity indicators forming each group. As used herein, depth is defined as a distance between the first surface 14 and a bottom surface of the respective sensitivity indicator. For example, a first row 80 includes the groups of sensitivity indicators having a first depth D1 ; e.g. groups 40, 46, and 52. A second row 82 includes the groups of sensitivity indicators having a second depth D2, e.g. groups 42, 48, and 54. A third row 84 includes the groups of sensitivity indicators having a third depth D3, e.g. groups 44, 50, and 56. The depth Di of the sensitivity indicators in the first row 80 is different than the depth D2 of the sensitivity indicators in the second row 82. Moreover, the depth D3 of the sensitivity indicators in the third row 84 is different than the depth Di and D2 of the sensitivity indicators in the first and second rows 80 and 82, respectively as is discussed in more detail below.

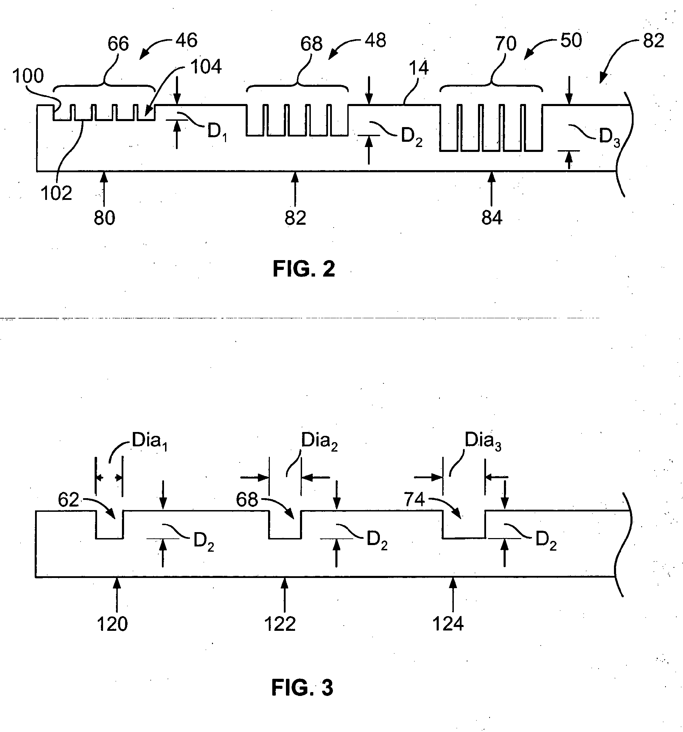

Figure 2 is a cross-sectional view of the test panel 10 taken along lines 2-2 as shown in Figure 1. As shown in Figure 2, and discussed above, the sensitivity indicators 18 are arranged in rows based on the depth of the sensitivity indicators. Although Figure 2 illustrates and describes row 82, it should be realized that the groups forming rows 80 and 84 are also arranged based on the depth of the sensitivity indicators similar to row 82. In the exemplary embodiment, the sensitivity indicators 66 forming the group 46 are each formed to have circular openings having a cross-sectional profile that is defined by a continuous edge, for example, blind holes. Thus, each exemplary sensitivity indicator 18 has a cylindrical sidewall and a substantially flat bottom. For example, the sensitivity indicator 66 is shown as having a cylindrical sidewall 100 that extends substantially vertically from a flat bottom surface 102 such that the sidewall 100 is substantially perpendicular to the bottom surface 102, and a substantially round opening 104. Each of the sensitivity indicators 18 is therefore formed as a well that is sized to receive a predetermined quantity of dye penetrant therein.

In the exemplary embodiment, the sensitivity indicators 66 in the group 46 are formed to have a depth D1; the sensitivity indicators 68 in the group 48 are formed to have a depth D2, and the sensitivity indicators 70 in the group 50 are formed to have a depth D3. In the exemplary embodiment, D1< D2< D3. For example, D may be approximately 0.127 mm (=0.005 inches), D2 may be approximately 0.254 mm (= 0.010 inches), and D3 may be approximately 0.381 mm (= 0.015 inches).

Thus, row 80 includes a plurality of sensitivity indicators arranged in groups 40, 46, and 52, wherein the sensitivity indicators in each of the groups 40, 46, and 52 are machined to the same depth D1. Row 82 includes a plurality of sensitivity indicators arranged in groups 42, 48, and 54, wherein the sensitivity indicators in each of the groups 42, 48, and 54 are machined to the same depth D2. Row 84 includes a plurality of sensitivity arranged in groups 44, 50, and 56, wherein the sensitivity indicators in each of the groups 44, 50, and 56 are machined to the same depth D3.

Referring again to Figure 1, the sensitivity indicators 18 are also arranged in columns based on the diameter of the openings in the sensitivity indicators. For example, a first column 120 includes groups of sensitivity indicators having a first opening diameter DIA1; e.g. groups 40, 42, and 44. A second column 122 includes groups of sensitivity indicators having a second opening diameter DIA2, e.g. groups 46, 48, and 50. A third column 124 includes groups of sensitivity indicators having a third opening diameter DIA3, e.g. groups 52, 54, and 56. The diameter of the sensitivity indicator openings in the first column 120 is different than the diameter of the sensitivity indicator openings in the second column 122. Moreover, the diameter of the sensitivity indicator openings in the third column 124 is different than the diameter of the sensitivity indicator openings in the first and second columns 120 and 122, respectively, as is discussed in more detail below.

Figure 3 is a cross-sectional view of the test panel 10 taken along lines 3-3 as shown in Figure 1. Although Figure 3 illustrates and describes column 122, it should be realized that the groups forming columns 120 and 124 are also arranged based on the diameter of the sensitivity indicator openings similar to column 122. In the exemplary embodiment, each of the sensitivity indicators 60, 62, and 64 in the groups 40, 42, and 44 have the same opening diameter DIA1.

The openings in the sensitivity indicators 66, 68, and 70 in the groups 46, 48, and 50 are formed to have a diameter DIA2. The openings in the sensitivity indicators 72, 74, and 76 in the groups 52, 54, and 56 are formed to have a diameter DIA3. In the exemplary embodiment, DIA1 < DIA 2 < DIA 3. For example, DIA1 may be approximately 0.0508 mm (= 0.002 inches), DIA2 may be approximately 0.1016 mm (= 0.004 inches), and DIA3 may be approximately 0.1524 mm (= 0.006 inches).

Thus, column 120 includes a plurality of sensitivity indicators arranged in groups 40, 42, and 44, wherein the sensitivity indicators in each of the groups 40, 42, and 44 are machined to have an opening diameter of DIA1. Column 122 includes a plurality of sensitivity indicators arranged in groups 46, 48, and 50, wherein the sensitivity indicators in each of the groups 46, 48, and 50 are machined to have an opening diameter of DIA2. Column 124 includes a plurality of sensitivity indicators arranged in groups 52, 54, and 56, wherein the sensitivity indicators in each of the groups 52, 54, and 56 are machined to have an opening diameter of DIA3.

In the exemplary embodiment, the size of the sensitivity indicators 18, e.g. the diameter and the depth, are determined based on a priori knowledge of actual cracks that occur in tested components. For example, the size of the sensitivity indicators 18 may be determined by investigating actual cracks to identify a volume of penetrant retained within the crack which is dependent based on the diameter of the crack and the depth of the crack. The size of the sensitivity indicators 18 may also be determined by investigating the resident time of the penetrant on the crack. The resident time is the time that the penetrant, after being applied to the test panel, has to seep into the crack in the test panel. Washing of the test panel, which occurs during testing, will remove some of the penetrant from the crack which is dependant on crack depth, opening, and water wash temperature and pressure. Further, for a given crack, the developer used in the process will wick penetrant out of the crack to visually amplify the indication and is time, crack opening size and volume dependant. Therefore, the time the penetrant has to seep into the sensitivity indicators 18, the volume of the sensitivity indicator 18, and the diameter of the opening in the sensitivity indicator 18 are each taken into account to form the test panel 10 having relatively small blind holes, of different sizes, to simulate the cracks and sensitivity of the process required to detect the crack sizes.

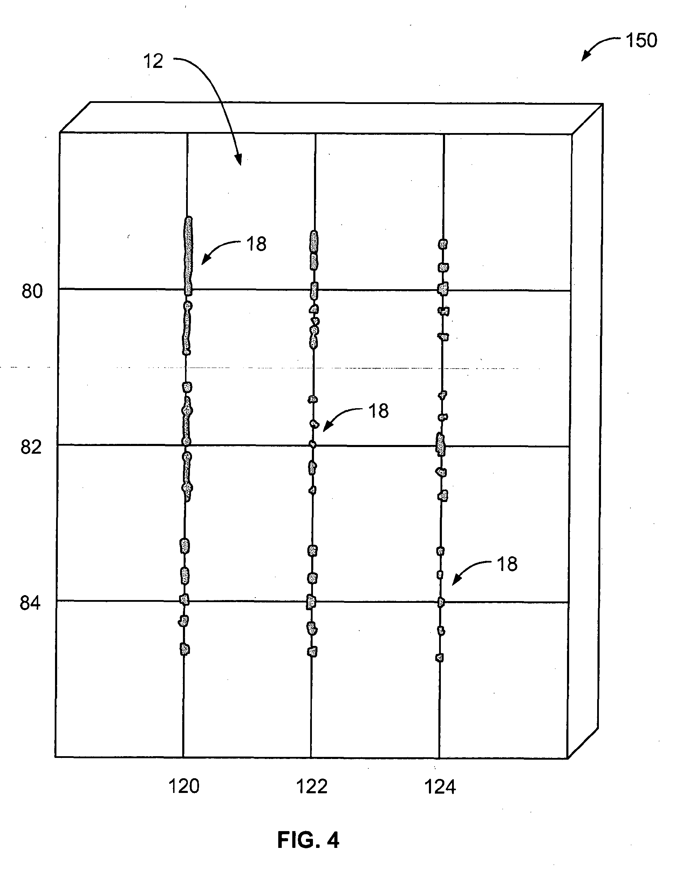

Figure 4 is an illustration of the exemplary test panel 150 after the test panel 150 has been utilized to verify a non-destructive liquid penetrant inspection process. In this embodiment, the test panel 150 includes the three rows 80, 82, and 84 of sensitivity indicators 18 having diameters of 0.0508 mm (= 0.002 inches), 0.1016 mm (= 0.004 inches) and 0.1524 mm (= 0.006 inches), respectively. The test panel 150 also includes the three columns 120, 122, and 124 of sensitivity indicators 18 having depths of 0.127 mm (= 0.005 inches), 0.254 mm (= 0.010 inches), and 0.381 mm (= 0.015 inches), respectively. In this embodiment, the sensitivity indicators 18 are arranged in different groups, wherein each group includes five sensitivity indicators 18. Figure 4 specifically shows the test panel 150 after the test panel 150 has been exposed to a test process under UV light. As shown in Figure 4, the test panel 150 has detected all of the indicators and thus the viability of blind holes as indicators is demonstrated. The test panel 150 further illustrates the ability to fabricate a plurality of different test panels that include sensitivity indicators 18 that are each formed to the same size to ensure consistent testing of the dye penetrant inspection process.

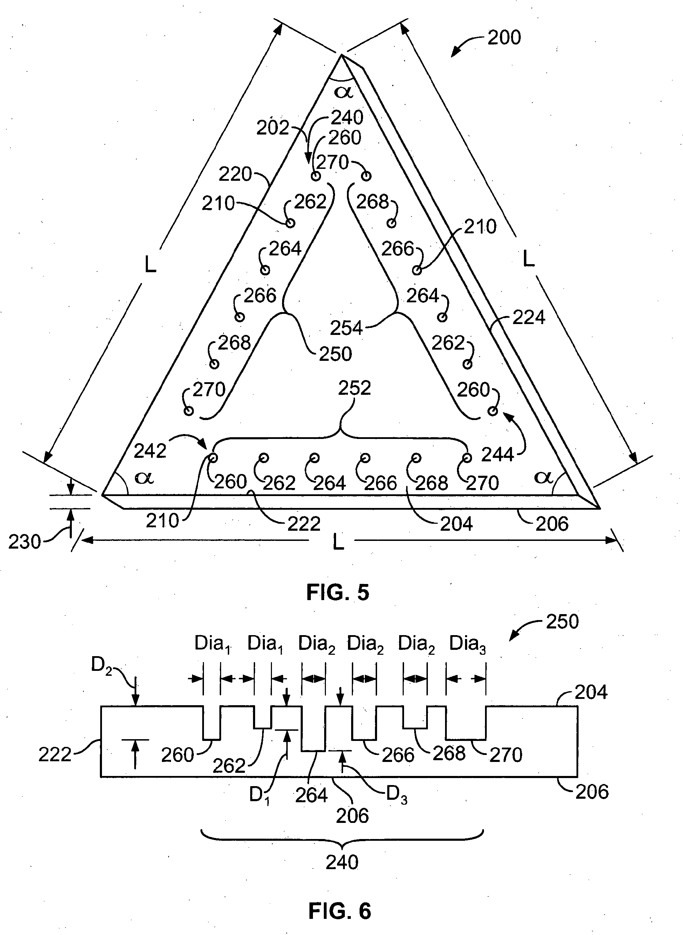

Figure 5 is top view of another exemplary test panel 200 that is formed in accordance with various embodiments. Figure 6 is a cross-sectional view of the test panel 200 taken along lines 6-6 as shown in Figure 6. The test panel 200 may be formed in a variety of shapes or sizes depending on the particular application. In the illustrated embodiment shown in Figure 5, the test panel 200 is formed as an equilateral triangle.

The test panel 200 includes a substrate 202 having a first surface 204 and an opposing second surface 206. The test panel 200 has a plurality of sensitivity indicators formed therein which are discussed in more detail below. In the exemplary embodiment, the substrate 202 is an uncoated substrate. Uncoated, as used herein, means that there is no plating material attached, or applied, to either the first or second surfaces 204 and 206 of the substrate 202.

The test panel 200 is formed to include a first side 220, a second side 222, and a third side 224. In this embodiment, the test panel 200 is formed as an equilateral triangle. Thus, the first side 220 has a length L, the second side 222 has the length L, and the third side 224 also has the length L. The first side 220, the second side 222, and the third side 224 are each formed at an angle a with respect to each other. In the exemplary embodiment, the angle α is 60 degrees thus forming the equilateral triangle shape. It should be realized that the embodiment shown in Figure 5 is illustrated as an equilateral triangle to enable an operator to distinguish the test panel 200 from other conventional test panels. However, it should also be realized that the test panel 200 may have any triangular shape, e.g. an isosceles triangle shape, that enables the operator to distinguish the test panel 200 from the TAM or PMS5 test panels which have a substantially rectangular shape.

A thickness 230 of the substrate 202 may be determined based on a depth of the plurality of sensitivity indicators 210 that are formed in the substrate 202. The sensitivity indicators 210 are formed on the first surface 204 of the substrate 202. In the exemplary embodiment, the sensitivity indicators 210 are again embodied as blind holes. Therefore, each sensitivity indicator 210 has a depth that is less than the thickness 230 of the substrate 202. The depths of the sensitivity indicators 210 are discussed in more detail below. In the exemplary embodiment, the sensitivity indicators 210 are formed using an electrical discharge machining (EDM) process such that the sensitivity indicators 210 are accurately dimensioned for each test panel 200.

In one embodiment, the sensitivity indicators 210 are arranged in a plurality of groups that are space apart from each other on the first surface 204 of the substrate 202. For example, a first group 240 of sensitivity indicators 250 is disposed proximate to the first side 220. A second group 242 of sensitivity indicators 252 is disposed proximate to the second side 222. A third group 244 of sensitivity indicators 254 is disposed proximate to the third side 226. The groups 240, 242, and 244 are each arranged in rows based on the diameter and depth of the sensitivity indicators forming each group.

For example, as shown in Figure 6, the sensitivity indicators 250 forming the first group 240 include a sensitivity indicator 260 having a diameter of DIA1 and a depth of D2. A second sensitivity indicator 262 has a diameter of DIA1 and a depth of D2. A third sensitivity indicator 264 has a diameter of DIA2 and a depth of D3. A fourth sensitivity indicator 266 has a diameter of DIA2 and a depth of D1. A fifth sensitivity indicator 268 has a diameter of DIA2 and a depth of D2. A sixth sensitivity indicator 270 has a diameter of DIA3 and a depth of D2. In the exemplary embodiment, the second and third groups 242 and 244 include the same sensitivity indicators as the first group 240. More specifically, the second and third groups 242 and 244 each include the sensitivity indicators 260...270., However, in the exemplary embodiment, the sensitivity indicators 260...270 in the first group are offset from the sensitivity indicators sensitivity indicators 260...270 in the second group 242 by 60 degrees. Moreover, the sensitivity indicators 260...270 in the third group 244 are offset from the sensitivity indicators 260...270 in the first and second groups 240 and 242 by 60 degrees.

In the exemplary embodiment, DIA1 < DIA 2 < DIA 3. For example, DIA1 may be approximately 0.0508 mm (= 0.002 inches), DIA2 may be approximately 0.1016 mm (= 0.004 inches), and DIA3 may be approximately 0.1524 mm (= 0.006 inches). Moreover, D1 < D2 < D3. For example, D1 may be approximately 0.127 mm (= 0.005 inches), D2 may be approximately 0.254 mm (= 0.010 inches), and D3 may be approximately 0.381 mm (= 0.015 inches). The size, e.g. depth and diameter, of the sensitivity indicators 260...270 in each of the groups 240, 242, and 244 are selected such that the sensitivity indicators 260...270 reflect the most popular and common crack sensitivity levels desired to be tested to. It should be realized that although the test panel 200 illustrates groups including six sensitivity indicators, the groups may include more than, or fewer than, six sensitivity indicators 260...270. It should also be realized that sensitivity indicators in each group are offset by 60 degrees from the same sized sensitivity indicator in the other groups such that the test panel 200 may be inserted into a process testing machine in any orientation and the sensitivity indicators 260...270 will be properly located in the machine.

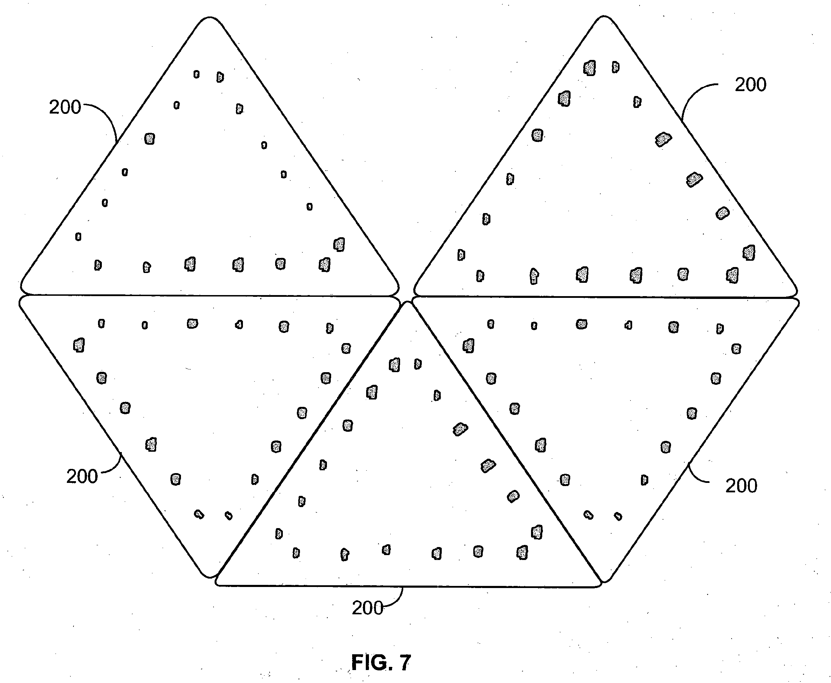

Figure 7 is a top perspective view of a plurality of the exemplary test panels 200 shown in Figure 6 after the test panels 200 have been utilized to verify a non-destructive liquid penetrant inspection process. Figure 7 specifically shows the test panels 200 after the test panel 200 has been exposed to a test process under UV light. As shown in Figure 7, the test panels 200 have detected all of the indicators and thus the viability of blind holes as indicators is demonstrated. The test panels 200 further illustrate the ability to fabricate a plurality of different test panels that include sensitivity indicators 260...270 that are each formed to the same size to ensure consistent testing of the dye penetrant inspection process.

Described herein are a plurality of exemplary test panels. In various embodiments, a test panel may have three sides that form an equilateral triangle shaped substrate. In other embodiment, a test panel may have four sides that form a rectangular shaped substrate. The test panels include indicators formed as a series of blind holes formed directly in a metallic substrate. The test panels may be fabricated from various metallic materials. Moreover, the test panels described herein do not have a plating material formed on the test panel. In operation, the test panels are configured to verify the integrity of the inspection process for use on metallic parts including commonly manufactured aluminum parts. The test panels may be fabricated from the same material as the actual part thus eliminating another variable and further lending to more accurate test integrity verification.

## Claims

1. A fluid penetrant inspection test panel (10; 200) for verifying the operational integrity and ability of an inspection process to identify cracks of at least a predetermined minimum objectionable size should they exist in an actual part, said test panel (10; 200) comprising:
- an uncoated substrate (12; 202) having a thickness (28; 230), a first surface (14; 204) and an opposing second surface (16; 206), the first surface configured to receive a dye penetrant thereon; and
- a plurality of sensitivity indicators (18; 210) formed in the first surface (14; 204), the plurality of sensitivity indicators having a cross-sectional profile defined by a continuous edge,
wherein the sensitivity indicators (18; 210) are formed as blind holes having circular openings;
wherein the sensitivity indicators (18; 210) have a circular cross-sectional profile;
wherein the sensitivity indicators (18; 210) have a depth (D₁, D₂, D₃) that is less than the thickness (28; 230) of the substrate (12; 202); and wherein the diameter and the depth of the sensitivity indicators (18; 210) are determined by investigating actual cracks to identify a volume of penetrant retained within the crack and by investigating a resident time of the penetrant on the crack such that the sensitivity of the inspection process required to identify cracks of the predetermined minimum objectionable size is simulated by the test panel (10; 200).

2. The fluid penetrant inspection test panel of claim 1,
wherein each blind hole has a cylindrical sidewall (100) and a substantially flat bottom surface (102) that is perpendicular to the sidewall.

3. The fluid penetrant inspection test panel of claim 1,
wherein the substrate (12) has a rectangular shape.

4. The fluid penetrant inspection test panel of claim 1,
wherein the sensitivity indicators (18) are arranged in rows (80, 82, 84) and columns (120, 122, 124), the rows including sensitivity indicators having the same diameter, the columns including sensitivity indicators having the same depth.

5. The fluid penetrant inspection test panel of claim 1,
wherein the sensitivity indicators (18; 210) are arranged into a plurality of groups (40, 42, 44, ... 56; 240, 242, 244), each group including sensitivity indicators having the same diameter and the same depth.

6. The fluid penetrant inspection test panel of claim 1,
wherein the substrate (202) has a triangular shape.

7. The fluid penetrant inspection test panel of claim 6,
wherein the substrate has a first side (220), a second side (222), and a third side (224) forming an equilateral triangle.

8. The fluid penetrant inspection test panel of claim 7,
wherein the sensitivity indicators (210) are arranged in groups (240, 242, 244), each group being disposed proximate to a side (220, 22, 224) of the substrate (202).

## Patentansprüche

1. Fluidpenetriermittelprüfungs-Testtafel (10; 200) zum Bestätigen der funktionellen Integrität und der Fähigkeit eines Prüfungsverfahrens, Risse mit wenigstens einer vorbestimmten kleinsten unannehmbaren Größe zu identifizieren, falls sie in einem tatsächlichen Stück vorliegen, wobei die Testtafel (10; 200) umfasst:
- ein unbeschichtetes Substrat (12; 202) mit einer Dicke (28; 230), einer ersten Oberfläche (14; 204) und einer gegenüberliegenden zweiten Oberfläche (16; 206), wobei die erste Oberfläche dafür gestaltet ist, ein Farbstoff-Penetriermittel darauf aufzunehmen; und
- eine Vielzahl von Empfindlichkeitsindikatoren (18; 210), die in der ersten Oberfläche (14; 204) gebildet sind, wobei die Vielzahl von Empfindlichkeitsindikatoren ein Querschnittsprofil aufweisen, das von einem durchgehenden Rand definiert ist,
wobei die Empfindlichkeitsindikatoren (18; 210) als Blindlöcher mit kreisförmigen Öffnungen gestaltet sind;
wobei die Empfindlichkeitsindikatoren (18; 210) ein kreisförmiges Querschnittsprofil aufweisen;
wobei die Empfindlichkeitsindikatoren (18; 210) eine Tiefe (D₁, D₂, D₃) aufweisen, die kleiner als die Dicke (28; 230) des Substrats (12; 202) ist; und
wobei der Durchmesser und die Tiefe der Empfindlichkeitsindikatoren (18; 210) durch Untersuchen von tatsächlichen Rissen bestimmt werden, um ein Volumen an in dem Riss zurückgehaltenem Penetriermittel zu bestimmen, und durch Untersuchen der Verweilzeit des Penetriermittels auf dem Riss, so dass die Empfindlichkeit des Prüfvorgangs, die zum Identifizieren von Rissen mit der vorbestimmten kleinsten unannehmbaren Größe erforderlich ist, durch die Testplatte (10; 200) simuliert wird.

2. Fluidpenetriermittelprüfungs-Testtafel gemäß Anspruch 1,
wobei jedes Blindloch eine zylindrische Seitenwand (100) und eine im Wesentlichen flache Bodenfläche (102), die senkrecht zu der Seitenwand steht, aufweist.

3. Fluidpenetriermittelprüfungs-Testtafel gemäß Anspruch 1,
wobei das Substrat (12) eine rechteckige Form aufweist.

4. Fluidpenetriermittelprüfungs-Testtafel gemäß Anspruch 1,
wobei die Empfindlichkeitsindikatoren (18) in Reihen (80, 82, 84) und Spalten (120, 122, 124) angeordnet sind, wobei die Reihen Empfindlichkeitsindikatoren mit dem gleichen Durchmesser enthalten und die Spalten Empfindlichkeitsindikatoren mit der gleichen Tiefe enthalten.

5. Fluidpenetriermittelprüfungs-Testtafel gemäß Anspruch 1,
wobei die Empfindlichkeitsindikatoren (18; 210) in einer Vielzahl von Gruppen (40, 42, 44, ... 56; 240, 242, 244) angeordnet sind, wobei jede Gruppe Empfindlichkeitsindikatoren mit dem gleichen Durchmesser und der gleichen Tiefe enthält.

6. Fluidpenetriermittelprüfungs-Testtafel gemäß Anspruch 1,
wobei das Substrat (202) eine dreieckige Form aufweist.

7. Fluidpenetriermittelprüfungs-Testtafel gemäß Anspruch 6,
wobei das Substrat eine erste Seite (220), eine zweite Seite (222) und eine dritte Seite (224), die ein gleichseitiges Dreieck bilden, aufweist.

8. Fluidpenetriermittelprüfungs-Testtafel gemäß Anspruch 7,
wobei die Empfindlichkeitsindikatoren (210) in Gruppen (240, 242, 244) angeordnet sind, wobei jede Gruppe nahe einer Seite (220, 22, 224) des Substrats (202) angeordnet ist.

## Revendications

1. Plaque d'essai d'inspection de pénétration de fluide (10 ; 200) destinée à vérifier l'intégrité opérationnelle et la capacité d'un processus d'inspection pour identifier des fissures d'au moins une taille inacceptable minimale prédéterminée, dans le cas où elles existeraient, au moins en partie, ladite plaque d'essai (10 ; 200) comprenant :
un substrat sans revêtement (12 ; 202) ayant une épaisseur (28 ; 230), une première surface (14 ; 204) et une seconde surface opposée (16 ; 206), la première surface étant configurée pour recevoir un ressuage sur celle-ci ; et
une pluralité d'indicateurs de sensibilité (18 ; 210) formés dans la première surface (14 ; 204), la pluralité des indicateurs de sensibilité ayant un profil en coupe transversale défini par un bord continu,
où les indicateurs de sensibilité (18 ; 210) sont formés sous forme de trous borgnes ayant des ouvertures circulaires ;
où les indicateurs de sensibilité (18 ; 210) ont un profil en coupe transversale circulaire ;
où les indicateurs de sensibilité (18 ; 210) ont une profondeur (D₁, D₂, D₃) qui est inférieure à l'épaisseur (28 ; 230) du substrat (12 ; 202) ; et
où le diamètre et la profondeur des indicateurs de sensibilité (18 ; 210) sont déterminés en recherchant les fissures effectives pour identifier un volume de pénétrant retenu dans la fissure de manière à ce que la sensibilité du processus d'inspection requis pour identifier les fissures de la taille inacceptable minimale prédéterminée soit simulée par la plaque d'essai (10 ; 200).

2. Plaque d'essai d'inspection de pénétration de fluide selon la revendication 1,
dans laquelle chaque trou borgne présente une paroi latérale cylindrique (100) et une surface inférieure sensiblement plane (102) qui est perpendiculaire à la paroi latérale.

3. Plaque d'essai d'inspection de pénétration de fluide selon la revendication 1,
dans laquelle le substrat (12) a une forme rectangulaire.

4. Plaque d'essai d'inspection de pénétration de fluide selon la revendication 1,
dans laquelle les indicateurs de sensibilité (18) sont disposés en rangées (80, 82, 84) et en colonnes (120, 122, 124), les rangées comportant des indicateurs de sensibilité ayant le même diamètre, les colonnes comportant des indicateurs de sensibilité ayant la même profondeur.

5. Plaque d'essai d'inspection de pénétration de fluide selon la revendication 1,
dans laquelle les indicateurs de sensibilité (18 ; 210) sont disposés dans une pluralité de groupes (40, 42, 44, ... 56 ; 240, 242, 244), chaque groupe comprenant des indicateurs de sensibilité ayant le même diamètre et la même profondeur.

6. Plaque d'essai d'inspection de pénétration de fluide selon la revendication 1,
dans laquelle le substrat (202) a une forme triangulaire.

7. Plaque d'essai d'inspection de pénétration de fluide selon la revendication 6,
dans laquelle le substrat comporte un premier côté (220), un deuxième côté (222) et un troisième côté (224) formant un triangle équilatéral.

8. Plaque d'essai d'inspection de pénétration de fluide selon la revendication 7,
dans laquelle les indicateurs de sensibilité (210) sont disposés en groupes (240, 242, 244), chaque groupe étant disposé à proximité d'un côté (220, 222, 224) du substrat (202).
